# EUROPEAN PATENT APPLICATION

(11) **EP 4 354 029 A1**
(43) Date of publication of application: **17.04.2024**
(21) Application number: 22832759.9
(22) Date of filing: 09.06.2022
(51) Int. Cl.: F24F 1/0038, F24F 1/0063, F24F 1/0068, F24F 7/08

(54) **VENTILATION DEVICE**

(30) Priority: 29.06.2021 JP 2021107607
(71) Applicant: Daikin Industries, Ltd., Osaka-shi, Osaka 530-0001 (JP)
(72) Inventor: IKEBE, Masanori, Osaka-shi, Osaka 530-0001 (JP); SUZUKI, Yuya, Osaka-shi, Osaka 530-0001 (JP)
(74) Representative: Hoffmann Eitle
(86) International application number: PCT/JP2022/023282
(87) International publication number: WO 2023/276602

(57) **Abstract**

A ventilation apparatus (10) includes: a casing (12) having an opening (18); a first heat exchanger (21); a second heat exchanger (25) connected to a heat source unit (80) through a connection pipe (86, 87) through which a heating medium flows; and a joint (27) configured to connect the second heat exchanger (25) and the connection pipe (86, 87) together. The casing (12) has an internal space (16) that communicates with the opening (18). The joint (27) is disposed in the internal space (16).

## Description

### TECHNICAL FIELD

The present disclosure relates to a ventilation apparatus.

### BACKGROUND ART

The ventilation apparatus disclosed in Patent Document 1 includes a total heat exchanger (first heat exchanger) and an air conditioning coil (second heat exchanger). The air conditioning coil of Patent Document 1 is connected to a refrigerant pipe, and allows a refrigerant to pass therethrough. The air conditioning coil causes heat exchange between the air supplied to the ventilation apparatus and the refrigerant supplied from the refrigerant pipe, thereby heating or cooling the air passing through the air conditioning coil.

### CITATION LIST

### PATENT DOCUMENT

Patent Document 1: WO 2018/109844

### SUMMARY OF THE INVENTION

### TECHNICAL PROBLEM

If a second heat exchanger of such a ventilation apparatus as described above undergoes maintenance, such as inspection and replacement, the joint between the second heat exchanger and the refrigerant pipe may be inspected or disconnected. Unfortunately, in such a ventilation apparatus as described above, no consideration has been given to the ease of maintenance of the second heat exchanger including the joint, resulting in low maintenance workability.

It is an object of the present disclosure to improve the maintainability of a second heat exchanger.

### SOLUTION TO THE PROBLEM

A first aspect is directed to a ventilation apparatus (10) including: a casing (12) having an air supply path (13) through which outdoor air is supplied into a room, and an exhaust path (14) through which room air is exhausted to an outside of the room, the casing (12) having an opening (18). The ventilation apparatus (10) includes a first heat exchanger (21) configured to allow heat exchange between air flowing through the air supply path (13) and air flowing through the exhaust path (14). The ventilation apparatus (10) includes a second heat exchanger (25) connected to a heat source unit (80) through a connection pipe (86, 87) through which a heating medium flows, and configured to cool the air flowing through the air supply path (13) with the heating medium. The ventilation apparatus (10) includes a joint (27) configured to connect the second heat exchanger (25) and the connection pipe (86, 87) together. The casing (12) has an internal space (16) that communicates with the opening (18). The joint (27) is disposed in the internal space (16).

According to the first aspect, the joint (27) is disposed in the internal space (16) of the casing (12). Thus, the joint (27) can be checked through the opening (18) of the casing (12) that communicates with the internal space (16). This facilitates maintenance of the second heat exchanger (25).

A second aspect is an embodiment of the first aspect. In the second aspect, the casing (12) has a first space (S1) included in the internal space (16) and overlapping with the opening (18) when viewed from a first direction orthogonal to an opening surface of the opening (18). The first heat exchanger (21) is disposed in the first space (S1).

According to the second aspect, the first heat exchanger (21) is disposed in the first space (S1) that overlaps with the opening (18) when viewed from the first direction. Thus, the first heat exchanger (21) can be taken out through the opening (18) immediately.

A third aspect is an embodiment of the second aspect. In the third aspect, the second heat exchanger (25) is arranged at a position not overlapping with the opening (18) when viewed from the first direction, and is movable toward the first space (S1).

According to the third aspect, since the second heat exchanger (25) is movable toward the first space (S1), the second heat exchanger (25) can be moved toward the first space (S1) after the first heat exchanger (21) is taken out through the opening (18). This allows the second heat exchanger (25) to be pulled out of the casing (12).

A fourth aspect is an embodiment of the second or third aspect. In the fourth aspect, the joint (27) is arranged at a position not overlapping with the first heat exchanger (21) when viewed from the first direction.

According to the fourth aspect, the joint (27) does not interfere with the first heat exchanger (21) when the first heat exchanger (21) is taken out through the opening (18) of the casing (12). This allows the first heat exchanger (21) to be easily taken out through the opening (18).

A fifth aspect is an embodiment of any one of the second to fourth aspects. In the fifth aspect, the joint (27) is arranged at a position overlapping with the opening (18) when viewed from the first direction.

According to the fifth aspect, the joint (27) is arranged at a position overlapping with the opening (18) of the casing (12) when viewed from the first direction. Thus, the joint (27) can be checked through the opening (18) immediately. In addition, according to the fifth aspect, a space for disconnecting the joint (27) is formed after the first heat exchanger (21) is taken out through the opening (18). Thus, the joint (27) can be easily disconnected.

A sixth aspect is an embodiment of any one of the second to fifth aspects. In the sixth aspect, the casing (12) has an inlet (15a) which is included in the opening (18) and through which the room air is sucked.

According to the sixth aspect, the inlet (15a) through which room air is sucked can be used as the opening (18).

A seventh aspect is an embodiment of any one of the second to sixth aspects. In the seventh aspect, the ventilation apparatus further includes a first container (31) configured to house the first heat exchanger (21). The first container (31) is disposed in the first space (S1). When viewed from the first direction, a projected area of the first container (31) is smaller than an area of the opening (18).

According to the seventh aspect, the projected area of the first container (31) when viewed from the first direction is smaller than the area of the opening (18). Thus, the first container (31) housing the first heat exchanger (21) can be taken out through the opening (18).

An eighth aspect is an embodiment of any one of the second to seventh aspects. In the eighth aspect, the ventilation apparatus further includes a second container (41) configured to house the second heat exchanger (25). The second container (41) is arranged at a position not overlapping with the opening (18) when viewed from the first direction, and is movable toward the first space (S1). When viewed from the first direction, a projected area of the second container (41) is smaller than an area of the opening (18).

According to the eighth aspect, the projected area of the second container (41) when viewed from the first direction is smaller than the area of the opening (18). Thus, the second container (41) housing the second heat exchanger (25) can be taken out through the opening (18).

A ninth aspect is an embodiment of the eighth aspect. In the ninth aspect, the joint (27) is fixed to the second container (41).

According to the ninth aspect, since the joint (27) is fixed to the second container (41), the second heat exchanger (25) and the joint (27) can be taken out together by pulling the second container (41) out of the casing (12).

A tenth aspect is an embodiment of any one of the first to ninth aspects. In the tenth aspect, the joint (27) is disposed outside the air supply path (13) and the exhaust path (14).

According to the tenth aspect, the flow of the air in the air supply path (13) and the exhaust path (14) can be less obstructed by the joint (27).

### BRIEF DESCRIPTION OF THE DRAWINGS

FIG. 1 is a diagram illustrating a general configuration of a building including a ventilation apparatus according to an embodiment.
FIG. 2 is a diagram illustrating a general configuration of a refrigerant circuit of the ventilation apparatus.
FIG. 3 is a perspective view illustrating the appearance of the ventilation apparatus.
FIG. 4 is a cross section taken along line IV-IV shown in FIG. 3 and viewed in the direction of arrows.
FIG. 5 is a cross section taken along line V-V shown in FIG. 4 and viewed in the direction of arrows.
FIG. 6 is a bottom view of the ventilation apparatus.
FIG. 7 is a bottom view of the ventilation apparatus from which an indoor panel has been detached.
FIG. 8 is a diagram illustrating the process of removing a first module.
FIG. 9 is a diagram illustrating the process of removing a second module.

### DESCRIPTION OF EMBODIMENTS

### «Embodiments»

Embodiments of the present disclosure will be described in detail below with reference to the drawings. The present disclosure is not limited to the embodiments shown below, and various changes can be made within the scope without departing from the technical concept of the present disclosure. Since each of the drawings is intended to illustrate the present disclosure conceptually, dimensions, ratios, or numbers may be exaggerated or simplified as necessary for the sake of ease of understanding.

### (1) Outline of Ventilation Apparatus

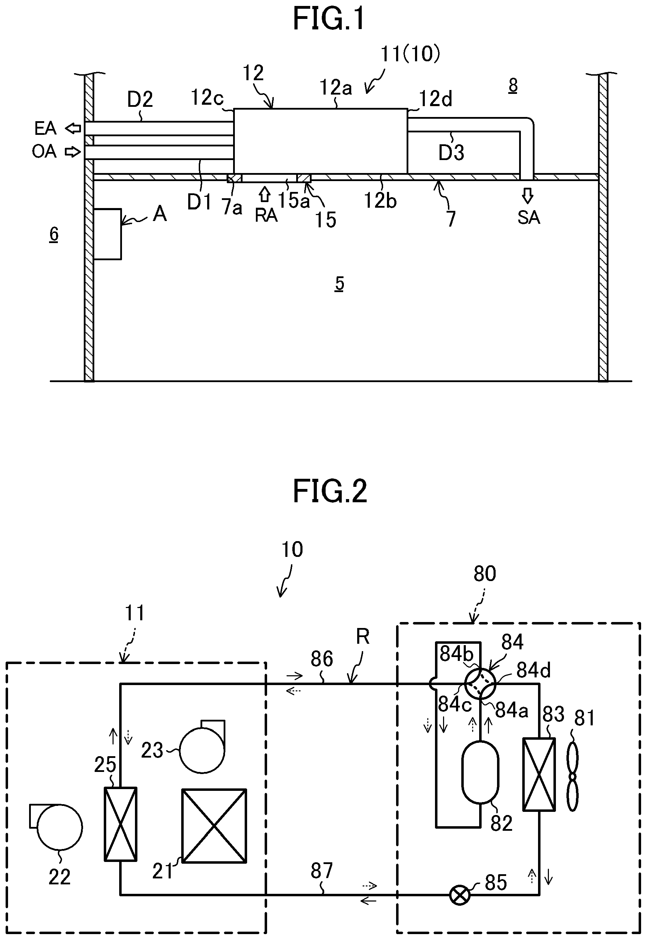

A ventilation apparatus (10) of the present disclosure ventilates an indoor space (5). As illustrated in FIG. 1, the ventilation apparatus (10) ventilates the indoor space (5) in a building, such as an ordinary house. The ventilation apparatus (10) supplies outdoor air (OA) in an outdoor space (6), as supply air (SA), into a room. At the same time, the ventilation apparatus (10) exhausts room air (RA) in the indoor space (5), as exhaust air (EA), to the outside of the room. The "indoor space" as used herein includes a habitable room, such as a living room, and a non-habitable room, such as a corridor. The ventilation apparatus (10) adjusts the temperature of air in the indoor space (5). The ventilation apparatus (10) performs a cooling operation and a heating operation.

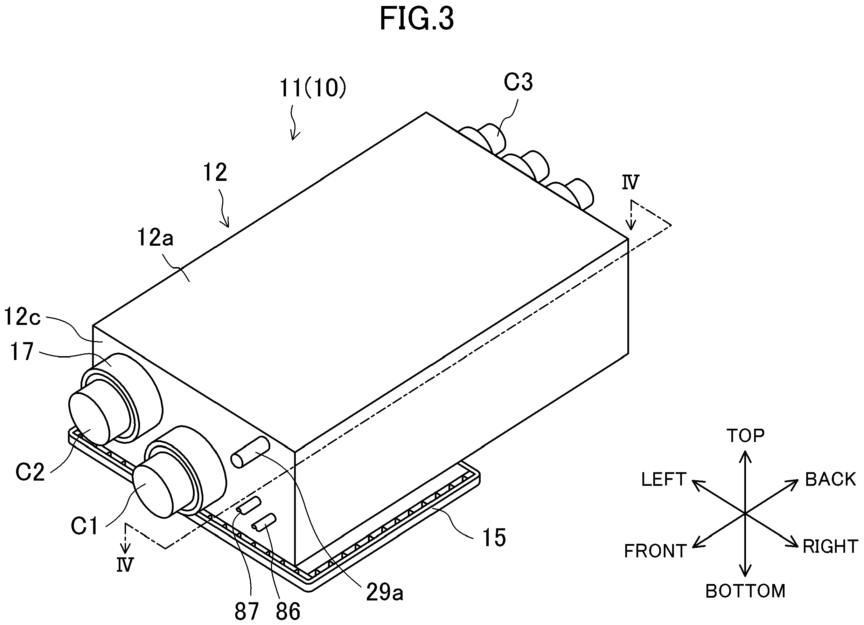

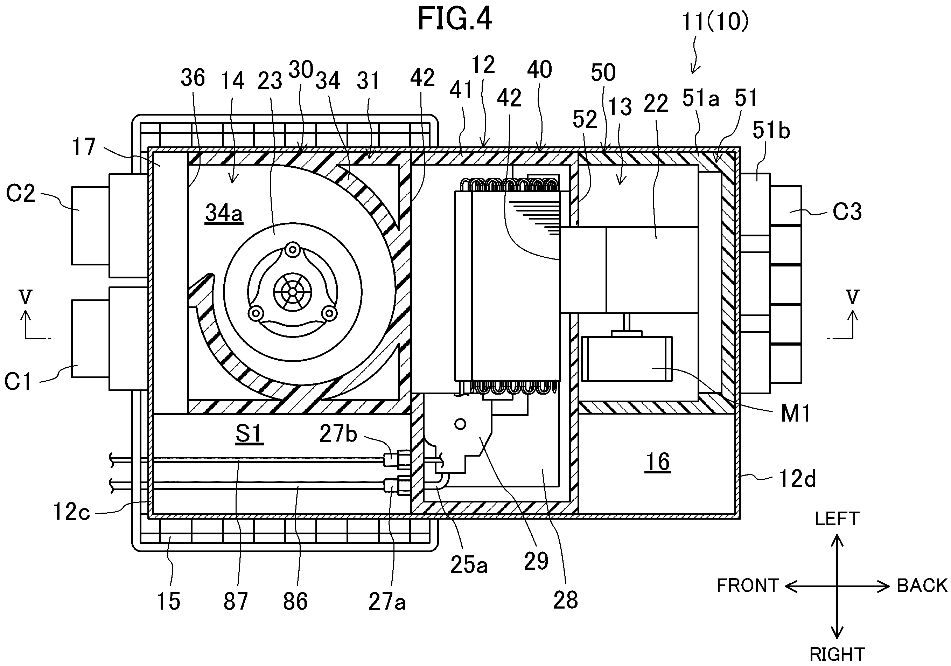

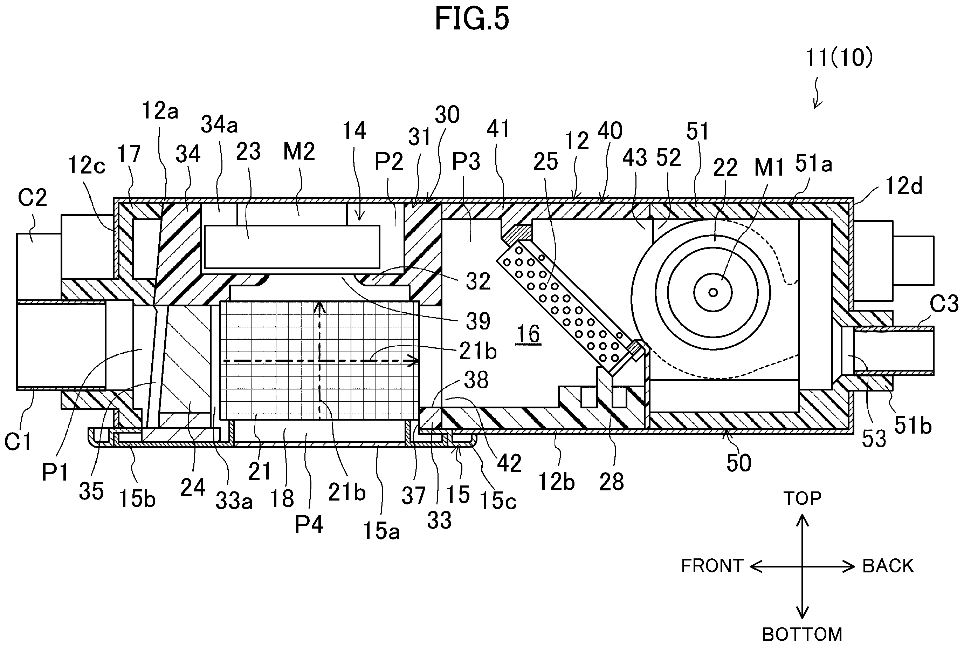

The ventilation apparatus (10) has a ventilation unit (11). The ventilation unit (11) is disposed in a ceiling space (8) behind the ceiling (7). The ventilation unit (11) of this example is a horizontal ventilation unit. As illustrated in FIG. 3, the ventilation unit (11) includes a casing (12). The ventilation unit (11) is oriented such that the longitudinal direction of the casing (12) corresponds to a substantially horizontal direction. As illustrated in FIGS. 4 and 5, the casing (12) has an air supply path (13) and an exhaust path (14). The air supply path (13) is a flow path through which outdoor air (OA) is supplied into the room. The exhaust path (14) is a flow path through which room air (RA) is exhausted to the outside of the room. The ventilation unit (11) includes an air supply fan (22), an exhaust fan (23), a total heat exchanger (21), and a utilization heat exchanger (25).

As illustrated in FIG. 2, the ventilation apparatus (10) includes a heat source unit (80). The heat source unit (80) and the utilization heat exchanger (25) are connected together through a first connection pipe (86) and a second connection pipe (87) as connection pipes. Such connection of the pipes forms a refrigerant circuit (R). The refrigerant circuit (R) is filled with a refrigerant. The refrigerant corresponds to a heating medium of the present disclosure. The refrigerant is, for example, R32 (difluoromethane). The refrigerant circulates in the refrigerant circuit (R) to perform a refrigeration cycle. The first connection pipe (86) is a gas-side connection pipe. The second connection pipe (87) is a liquid-side connection pipe.

### (2) Duct

As illustrated in FIG. 1, the ventilation unit (11) is connected to an outside air duct (D1), an exhaust duct (D2), and air supply ducts (D3). The inlet end of the outside air duct (D1) communicates with the outdoor space (6). The outlet end of the outside air duct (D1) is joined to the inlet end of the air supply path (13). The inlet end of the exhaust duct (D2) is joined to the outlet end of the exhaust path (14). The outlet end of the exhaust duct (D2) communicates with the outdoor space (6). The inlet ends of the air supply ducts (D3) are joined to the outlet end of the air supply path (13). The outlet ends of the air supply ducts (D3) communicate with the indoor space (5).

### (3) Detailed Structure of Ventilation Unit

The ventilation unit (11) includes the casing (12), first to third containers (31, 41, 51), the total heat exchanger (21), a filter (24), the air supply fan (22), the exhaust fan (23), the utilization heat exchanger (25), refrigerant pipe joints (27), a drain pan (28), and a pump (29).

The terms "top," "bottom," "left," "right," "front," and "back" in the following description refer to the directions when the ventilation unit (11) is viewed from the front, as illustrated in FIGS. 3 to 5. The front surface of the ventilation unit (11) is a side surface provided with a first duct joint (C1) and a second duct joint (C2), which will be described later.

### (3-1) Casing

The casing (12) is disposed in the ceiling space (8). As illustrated in FIGS. 1 and 3 to 5, the casing (12) has a rectangular parallelepiped shape. The casing (12) extends in the front-to-back direction along the ceiling (7). In this example, the longitudinal direction of the casing (12) corresponds to the front-to-back direction. The casing (12) has the shape of a hollow box. In other words, the casing (12) has therein an internal space (16). The casing (12) has a top plate (12a), a bottom plate (12b), and four side plates. The four side plates include a first side plate (12c) and a second side plate (12d) facing each other.

The top plate (12a) forms an upper surface of the casing (12). The bottom plate (12b) forms a lower surface of the casing (12). The top plate (12a) and the bottom plate (12b) face each other. The first side plate (12c) forms a front side surface of the casing (12) in the front-to-back direction (on one end in the longitudinal direction). The second side plate (12d) forms a back side surface of the casing (12) in the front-to-back direction (on the other end in the longitudinal direction). The top plate (12a) and the bottom plate (12b) extend substantially horizontally. The first side plate (12c) and the second side plate (12d) extend substantially vertically.

The first side plate (12c) is provided with the first and second duct joints (C1) and (C2) via a duct fixing member (17). The duct fixing member (17) is disposed at a front end portion in the casing (12). The duct fixing member (17) includes a body portion having a rectangular parallelepiped shape, and two tubular portions protruding forward from the front side surface of the body portion. The first and second duct joints (C1) and (C2) are each disposed inside an associated one of the tubular portions.

The first and second duct joints (C1) and (C2) are tubular. The first and second duct joints (C1) and (C2) protrude forward (laterally) from the outer surface of the first side plate (12c). In this example, the number of the first duct joint (C1) is one, and the number of the second duct joint (C2) is one. The outlet end of the outside air duct (D1) is connected to the first duct joint (C1). The inlet end of the exhaust duct (D2) is connected to the second duct joint (C2).

The second side plate (12d) is provided with third duct joints (C3). The third duct joints (C3) are tubular. The third duct joints (C3) protrude backward (laterally) from the outer surface of the second side plate (12d). In this example, the number of the third duct joints (C3) is five. The third duct joints (C3) are each connected to the inlet end of an associated one of the air supply ducts (D3). Note that FIG. 1 illustrates only one of the air supply ducts (D3) for the sake of convenience.

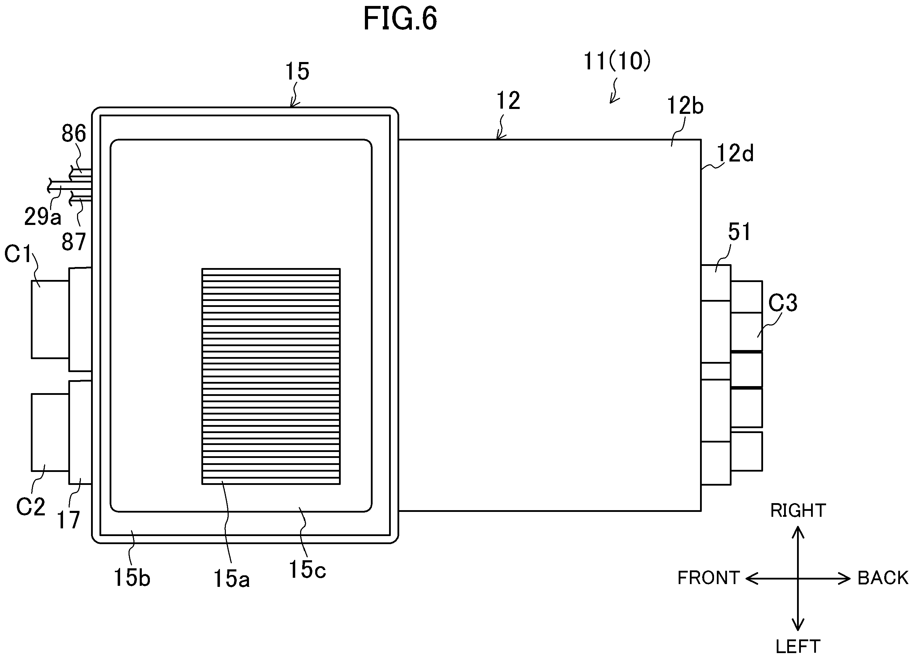

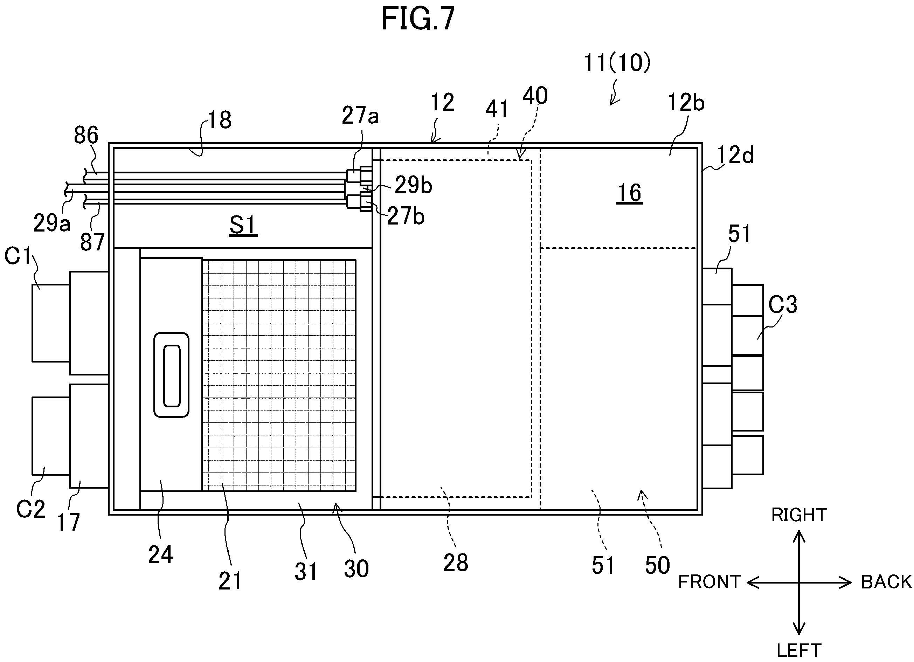

As illustrated in FIG. 7, a front portion of the lower surface of the casing (12) has an access hole (18). The access hole (18) corresponds to an opening of the present disclosure. The access hole (18) communicates with the internal space (16) of the casing (12). As illustrated in FIGS. 5 and 6, an indoor panel (15) is provided below the access hole (18).

The indoor panel (15) covers the access hole (18). As schematically illustrated in FIG. 1, the indoor panel (15) is provided inside a ceiling opening (7a) that passes through the ceiling (7). The indoor panel (15) faces the indoor space (5). The indoor panel (15) is fixed to the casing (12) with fastening members (e.g., bolts). The indoor panel (15) includes a flat plate part (15b) and a frame part (15c). The flat plate part (15b) closes the access hole (18). The frame part (15c) is a frame surrounding the flat plate part (15b). The indoor panel (15) is removable.

The flat plate part (15b) of the indoor panel (15) has an inlet (15a). The inlet (15a) is included in the access hole (18). In other words, a portion of the access hole (18) forms the inlet (15a). The inlet (15a) sucks room air. The inlet (15a) allows the indoor space (5) and the inlet end of the exhaust path (14) to communicate with each other.

### (3-2) First Container

A first container (31) is disposed in a front portion of the casing (12). The first container (31) is disposed above the access hole (18). The first container (31) is made of styrene foam. The first container (31) has a rectangular parallelepiped shape. The first container (31) is open on its upper and lower sides. The first container (31) includes a partitioning portion (32), a total heat exchanger containing portion (33), and a housing portion (34).

As illustrated in FIG. 5, the partitioning portion (32) is a plate-shaped portion above the center of the first container (31) in the top-to-bottom direction. The partitioning portion (32) partitions the space defined in the casing (12) by the first container (31) into a total heat exchanger-containing space (33a) and a fan-containing space (34a).

The total heat exchanger-containing space (33a) is formed below the partitioning portion (32). The total heat exchanger-containing space (33a) is surrounded by the total heat exchanger containing portion (33) and the indoor panel (15). The total heat exchanger containing portion (33) has a box shape. The total heat exchanger (21) and the filter (24) are disposed in the total heat exchanger-containing space (33a).

The fan-containing space (34a) is formed above the partitioning portion (32). The fan-containing space (34a) is surrounded by the housing portion (34) and the top plate (12a) of the casing (12). As illustrated in FIG. 4, the housing portion (34) has an arc shape to surround the exhaust fan (23). The housing portion (34) extends upward from the partitioning portion (32). The exhaust fan (23) is disposed in the fan-containing space (34a).

The front side surface of the first container (31) has a first inflow port (35) and a first outflow port (36), which are substantially rectangular. The first inflow port (35) communicates with the total heat exchanger-containing space (33a). The first inflow port (35) communicates with the first duct joint (C1) via the duct fixing member (17). A flow path from the outlet end of the first duct joint (C1) via the first inflow port (35) to the front side surface of the total heat exchanger (21) forms a first flow path (P1). The first flow path (P1) forms a portion of the air supply path (13) located upstream of the total heat exchanger (21).

The first outflow port (36) communicates with the fan-containing space (34a). The first outflow port (36) communicates with the second duct joint (C2) via the duct fixing member (17). The partitioning portion (32) has a substantially circular communication port (39). The communication port (39) is formed above the total heat exchanger (21). The communication port (39) allows the total heat exchanger-containing space (33a) and the fan-containing space (34a) to communicate with each other.

A flow path from the outlet end of the second duct joint (C2) via the first outflow port (36) and the communication port (39) to the upper surface of the total heat exchanger (21) forms a second flow path (P2). The second flow path (P2) forms a portion of the exhaust path (14) located downstream of the total heat exchanger (21).

The back side surface of the first container (31) has a substantially rectangular second outflow port (38). The second outflow port (38) communicates with the total heat exchanger-containing space (33a). A flow path from the back side surface of the total heat exchanger (21) via the second outflow port (38) to the inlet ends of the third duct joints (C3) forms a third flow path (P3). The third flow path (P3) forms a portion of the air supply path (13) located downstream of the total heat exchanger (21).

The lower side of the first container (31) has a substantially rectangular second inflow port (37). The second inflow port (37) communicates with the total heat exchanger-containing space (33a). The second inflow port (37) is formed above the access hole (18) of the casing (12). A flow path from the inlet (15a) of the indoor panel (15) via the second inflow port (37) to the lower surface of the total heat exchanger (21) forms a fourth flow path (P4). The fourth flow path (P4) forms a portion of the exhaust path (14) located upstream of the total heat exchanger (21).

### (3-3) Second Container

A second container (41) is housed in the casing (12). The second container (41) is located behind and adjacent to the first container (31). The second container (41) is disposed in a central portion of the casing (12). The second container (41) is made of resin.

The second container (41) has a rectangular parallelepiped shape. The second container (41) is disposed in the casing (12) such that its longitudinal direction corresponds to the right-to-left direction. The second container (41) has a greater length in the right-to-left direction than the first container (31) does. The second container (41) has generally the same length in the right-to-left direction as that of the internal space (16) of the casing (12). In other words, the length of the casing (12) in the right-to-left direction is determined based on the length of the second container (41) in the right-to-left direction. The second container (41) has an open lower surface. The second container (41) includes therein the utilization heat exchanger (25) and the pump (29).

The front side surface of the second container (41) has an inflow port (42). The inflow port (42) is positioned to correspond to the second outflow port (38) of the first container (31). The inflow port (42) communicates with the total heat exchanger-containing space (33a) via the second outflow port (38) of the first container (31). The back side surface of the second container (41) has an outflow port (43). The outflow port (43) is formed behind the utilization heat exchanger (25). A flow path from the inflow port (42) to the outflow port (43) of the second container (41) forms a portion of the third flow path (P3).

### (3-4) Third Container

The third container (51) is housed in the casing (12). The third container (51) is located behind and adjacent to the second container (41). The third container (51) is disposed in a back portion of the casing (12). The third container (51) is made of styrene foam.

The third container (51) includes a body portion (51a) and duct fixing portions (51b). The body portion (51a) has a rectangular parallelepiped shape. The third container (51) is disposed in the casing (12) such that the longitudinal direction of the body portion (51a) corresponds to the right-to-left direction. The duct fixing portions (51b) protrude backward from the back side surface of the body portion (51a). The duct fixing portions (51b) are tubular. The third duct joints (C3) are each fixed to an associated one of the duct fixing portions (51b). The air supply fan (22) is disposed inside the third container (51).

The third container (51) has generally the same length in the right-to-left direction as that of the first container (31). In other words, the third container (51) has a shorter length in the right-to-left direction than the second container (41) does.

The front side surface of the third container (51) has a substantially rectangular inflow port (52). The inflow port (52) is positioned to correspond to the outflow port (43) of the second container (41). The inflow port (52) communicates with the internal space of the second container (41) via the outflow port (43) of the second container (41).

The back side surface of the third container (51) has outflow ports (53). The number of the outflow ports (53) of this example is five. The third duct joints (C3) are connected to the associated outflow ports (53). A flow path from the inflow port (52) of the third container (51) to the inlet end of the third duct joint (C3) forms a portion of the third flow path (P3).

### (3-5) Total Heat Exchanger

The total heat exchanger (21) corresponds to a first heat exchanger of the present disclosure. The total heat exchanger (21) is housed in the first container (31). Specifically, the total heat exchanger (21) is disposed in the total heat exchanger-containing space (33a). The total heat exchanger (21) allows heat exchange between the air flowing through the air supply path (13) and the air flowing through the exhaust path (14). As schematically illustrated in FIG. 5, the total heat exchanger (21) has therein an air supply internal flow path (21a) and an exhaust internal flow path (21b). The air supply internal flow path (21a) and the exhaust internal flow path (21b) are orthogonal to each other.

An inflow portion of the air supply internal flow path (21a) is joined to the first flow path (P1). An outflow portion of the air supply internal flow path (21a) is joined to the third flow path (P3). In other words, the air supply path (13) includes the first flow path (P1), the air supply internal flow path (21a), and the third flow path (P3). An inflow portion of the exhaust internal flow path (21b) is joined to the fourth flow path (P4). An outflow portion of the exhaust internal flow path (21b) is joined to the second flow path (P2). In other words, the exhaust path (14) includes the fourth flow path (P4), the exhaust internal flow path (21b), and the second flow path (P2).

The total heat exchanger (21) transfers heat between air in the air supply internal flow path (21a) and air in the exhaust internal flow path (21b). The total heat exchanger (21) transfers moisture between air in the air supply internal flow path (21a) and air in the exhaust internal flow path (21b). As can be seen, the total heat exchanger (21) exchanges latent heat and sensible heat between the air in the air supply internal flow path (21a) and the air in the exhaust internal flow path (21b).

The total heat exchanger (21) is placed such that the inflow surface of the exhaust internal flow path (21b) lies along the opening surface of the inlet (15a). In other words, the air flowing through the exhaust internal flow path (21b) flows in a substantially vertical direction. The air flowing through the exhaust internal flow path (21b) flows upward from the bottom. The air flowing through the air supply internal flow path (21a) flows in a substantially horizontal direction. The air flowing through the air supply internal flow path (21a) flows backward from the front.

### (3-6) Filter

The ventilation unit (11) includes the filter (24). The filter (24) is disposed in the first flow path (P1). The filter (24) is disposed upstream of the total heat exchanger (21) in the air supply path (13). The filter (24) is disposed between the first inflow port (35) and the total heat exchanger (21) in the first container (31). The filter (24) collects dust in outdoor air (OA). The fourth flow path (P4) may include a filter.

### (3-7) Air Supply Fan

The air supply fan (22) is disposed in the third flow path (P3). The air supply fan (22) is housed inside the third container (51). The air supply fan (22) transfers air in the air supply path (13). The air supply fan (22) is a sirocco fan. The air supply fan (22) may be a turbo fan or a propeller fan.

The air supply fan (22) is driven by a first motor (M1). The number of revolutions of the first motor (M1) is variable. The first motor (M1) is a direct-current (DC) fan motor, the number of revolutions of which is adjustable. The air supply fan (22) is configured such that its volume of air is variable. The air supply fan (22) is fixed to the third container via a housing.

### (3-8) Exhaust Fan

The exhaust fan (23) is disposed in the second flow path (P2). The exhaust fan (23) is housed in the fan-containing space (34a) of the first container (31). The exhaust fan (23) transfers air in the exhaust path (14). The exhaust fan (23) is a sirocco fan. The exhaust fan (23) may be a turbo fan or a propeller fan.

The exhaust fan (23) is driven by a second motor (M2). The number of revolutions of the second motor (M2) is variable. The second motor (M2) is a DC fan motor, the number of revolutions of which is adjustable. The exhaust fan (23) is configured such that its volume of air is variable.

The second motor (M2) is fixed to a front portion, in the front-to-back direction, of the top plate (12a) of the casing (12). In other words, the second motor (M2) is fixed to an upper portion of the first container (31). The exhaust fan (23) is disposed below the second motor (M2).

### (3-9) Utilization Heat Exchanger

The utilization heat exchanger (25) corresponds to a second heat exchanger of the present disclosure. The utilization heat exchanger (25) is disposed in the third flow path (P3). The utilization heat exchanger (25) is disposed downstream of the total heat exchanger (21) in the air supply path (13). The utilization heat exchanger (25) is disposed between the air supply internal flow path (21a) and the air supply fan (22) in the third flow path (P3).

The utilization heat exchanger (25) is disposed in a left portion of the second container (41). The utilization heat exchanger (25) is inclined downward and backward. The utilization heat exchanger (25) is inclined 45 degrees relative to the vertical direction. An upper portion of the utilization heat exchanger (25) is supported by the upper surface of the second container (41). A lower portion of the utilization heat exchanger (25) is supported by the drain pan (28).

The utilization heat exchanger (25) allows heat exchange between the refrigerant flowing therethrough and the air flowing through the air supply path (13). The utilization heat exchanger (25) is a fin-and-tube air heat exchanger. The utilization heat exchanger (25) includes a large number of fins and a heat transfer tube (25a). The heat transfer tube (25a) extends in the direction of arrangement of the large number of fins. The refrigerant flows through the heat transfer tube (25a).

The utilization heat exchanger (25) in the cooling operation functions as an evaporator to cool air. The utilization heat exchanger (25) in the heating operation functions as a radiator (strictly speaking, a condenser) to heat air.

### (3-10) Refrigerant Pipe Joint

As illustrated in FIG. 4, the ventilation unit (11) includes the refrigerant pipe joints (27). The refrigerant pipe joints (27) correspond to joints of the present disclosure. The refrigerant pipe joints (27) are disposed on the right side of the first container (31) in the internal space (16) of the casing (12). The refrigerant pipe joints (27) are connectors that each connect the utilization heat exchanger (25) and the associated connection pipe (86, 87) together. The ventilation unit (11) includes a first refrigerant pipe joint (27a) and a second refrigerant pipe joint (27b) as refrigerant pipe joints (27).

The first refrigerant pipe joint (27a) connects the first connection pipe (86) and the heat transfer tube (25a) together. The second refrigerant pipe joint (27b) connects the second connection pipe (87) and the heat transfer tube (25a) together. The first and second refrigerant pipe joints (27a) and (27b) are arranged to protrude forward from the front side surface of the second container (41). The first and second refrigerant pipe joints (27a) and (27b) are fixed to a right portion of the front side surface. Specifically, the first and second refrigerant pipe joints (27a) and (27b) are fixed while passing through the front side surface of the second container (41).

### (3-11) Drain Pan

As illustrated in FIG. 5, the drain pan (28) is disposed above the bottom plate (12b) of the casing (12). The drain pan (28) is placed on the bottom plate (12b) of the casing (12). The drain pan (28) is disposed below the utilization heat exchanger (25). The drain pan (28) is disposed in a lower portion of the second container (41). The drain pan (28) closes the lower side of the second container (41). The drain pan (28) has a dish shape with its upper end open. The drain pan (28) receives condensed water generated around the utilization heat exchanger (25).

### (3-12) Pump

As illustrated in FIG. 4, the pump (29) is disposed inside the second container (41). The pump (29) is disposed above the drain pan (28). The pump (29) is disposed on the right side of the utilization heat exchanger (25). In other words, the pump (29) is disposed in a right portion of the internal space of the second container (41). The pump (29) drains water from the drain pan (28). The pump (29) sucks water from its bottom.

A drainpipe (29a) is connected to the pump (29) via a drain relay pipe (not shown) and a drainpipe joint (29b). The drainpipe (29a) is disposed outside the second container (41). The drain relay pipe connects an upper portion of the pump (29) and the drainpipe joint (29b) together. The drain relay pipe is disposed inside the second container (41).

The drainpipe joint (29b) is a connector that connects the drain relay pipe and the drainpipe (29a) together. The drainpipe joint (29b) is disposed in the internal space (16) of the casing (12). The drainpipe joint (29b) is fixed while passing through the front side surface of the second container (41). The drainpipe joint (29b) is disposed above the pump (29). The drainpipe joint (29b) is disposed above the first and second refrigerant pipe joints (27a) and (27b). The drainpipe (29a) is disposed on the right side of the first container (31) in the casing (12). Operation of the pump (29) causes water accumulated in the drain pan (28) to be sucked through the bottom of the pump (29) and drained out of the casing (12) through the drainpipe (29a).

### (4) Heat Source Unit

The heat source unit (80) illustrated in FIG. 2 is disposed in the outdoor space (6). The heat source unit (80) includes a heat source fan (81). The heat source unit (80) includes a compressor (82), a heat source heat exchanger (83), a switching mechanism (84), and an expansion valve (85) as components of the refrigerant circuit (R).

The compressor (82) compresses sucked refrigerant. The compressor (82) discharges the compressed refrigerant. The compressor (82) is of an inverter type.

The heat source heat exchanger (83) is a fin-and-tube air heat exchanger. The heat source heat exchanger (83) is an outdoor heat exchanger that allows heat exchange between the refrigerant flowing therethrough and outdoor air.

The heat source fan (81) is disposed near the heat source heat exchanger (83). The heat source fan (81) of this example is a propeller fan. The heat source fan (81) transfers air passing through the heat source heat exchanger (83).

The switching mechanism (84) changes the flow path of the refrigerant circuit (R) so as to switch between a first refrigeration cycle which is a cooling cycle and a second refrigeration cycle which is a heating cycle. The switching mechanism (84) is a four-way switching valve. The switching mechanism (84) has a first port (84a), a second port (84b), a third port (84c), and a fourth port (84d). The first port (84a) of the switching mechanism (84) is joined to the discharge portion of the compressor (82). The second port (84b) of the switching mechanism (84) is joined to the suction portion of the compressor (82). The third port (84c) of the switching mechanism (84) is joined to the gas-side end of the utilization heat exchanger (25) through the first connection pipe (86). The fourth port (84d) of the switching mechanism (84) is joined to the gas-side end of the heat source heat exchanger (83).

The switching mechanism (84) switches between a first state and a second state. The switching mechanism (84) in the first state (state indicated by solid lines in FIG. 2) causes the first port (84a) and the fourth port (84d) to communicate with each other, and causes the second port (84b) and the third port (84c) to communicate with each other. The switching mechanism (84) in the second state (state indicated by dashed lines in FIG. 2) causes the first port (84a) and the third port (84c) to communicate with each other, and causes the second port (84b) and the fourth port (84d) to communicate with each other.

The expansion valve (85) has one end joined to the liquid-side end of the heat source heat exchanger (83), and the other end joined to the liquid-side end of the utilization heat exchanger (25) via the second connection pipe (87). The expansion valve (85) is an electronic expansion valve having a variable opening degree.

### (5) Operation

Operation of the ventilation apparatus (10) will be described with reference to FIG. 2. The ventilation apparatus (10) switchably performs the cooling operation and the heating operation. In FIG. 2, the flow of the refrigerant in the cooling operation is indicated by solid arrows, and the flow of the refrigerant in the heating operation is indicated by dashed arrows.

### (5-1) Cooling Operation

In the cooling operation, the compressor (82) and the heat source fan (81) operate; the switching mechanism (84) is in the first state; and the opening degree of the expansion valve (85) is adjusted. In addition, in the cooling operation, the air supply fan (22) and the exhaust fan (23) operate.

In the cooling operation, the refrigerant circuit (R) performs the first refrigeration cycle. In the first refrigeration cycle, the heat source heat exchanger (83) functions as a radiator, and the utilization heat exchanger (25) functions as an evaporator.

In the ventilation unit (11) during the cooling operation, operation of the exhaust fan (23) causes room air (RA) to be taken into the fourth flow path (P4). Operation of the air supply fan (22) causes outdoor air (OA) to be taken into the first flow path (P1). The air in the first flow path (P1) flows through the air supply internal flow path (21a) of the total heat exchanger (21). The air in the fourth flow path (P4) flows through the exhaust internal flow path (21b) of the total heat exchanger (21).

For example, in summer, the indoor space (5) is cooled by another air conditioner (A) illustrated in FIG. 1. In this case, the room air (RA) has a lower temperature than the outdoor air (OA) does. In addition, the room air (RA) has a lower humidity than the outdoor air (OA) does. Thus, in the total heat exchanger (21), the air in the air supply internal flow path (21a) is cooled by the air in the exhaust internal flow path (21b). At the same time, the total heat exchanger (21) transfers moisture in the air in the air supply internal flow path (21a) to the air in the exhaust internal flow path (21b).

The air that has flowed out of the exhaust internal flow path (21b) into the second flow path (P2) flows through the exhaust duct (D2), and is exhausted to the outdoor space (6) as the exhaust air (EA).

The air cooled and dehumidified in the air supply internal flow path (21a) flows out into the third flow path (P3). This air is cooled by the utilization heat exchanger (25). The cooled air flows through the air supply ducts (D3), and is supplied to the indoor space (5) as the supply air (SA).

### (5-2) Heating Operation

In the heating operation, the compressor (82) and the heat source fan (81) operate; the switching mechanism (84) is in the second state; and the opening degree of the expansion valve (85) is adjusted. In addition, in the heating operation, the air supply fan (22) and the exhaust fan (23) operate.

In the heating operation, the refrigerant circuit (R) performs the second refrigeration cycle. In the second refrigeration cycle, the utilization heat exchanger (25) functions as a radiator, and the heat source heat exchanger (83) functions as an evaporator.

For example, in winter, the indoor space (5) is heated by another air conditioner (A) illustrated in FIG. 1. In this case, the room air (RA) has a higher temperature than the outdoor air (OA) does. In addition, the room air (RA) has a higher humidity than the outdoor air (OA) does. Thus, in the total heat exchanger (21), the air in the air supply internal flow path (21a) is heated by the air in the exhaust internal flow path (21b). At the same time, the total heat exchanger (21) transfers moisture in the air in the exhaust internal flow path (21b) to the air in the air supply internal flow path (21a).

The air that has flowed out of the exhaust internal flow path (21b) into the second flow path (P2) flows through the exhaust duct (D2), and is exhausted to the outdoor space (6) as the exhaust air (EA).

The air heated and humidified in the air supply internal flow path (21a) flows out into the third flow path (P3). This air is heated by the utilization heat exchanger (25). The heated air flows through the air supply ducts (D3), and is supplied to the indoor space (5) as the supply air (SA).

### (6) Module Structure

The ventilation apparatus (10) houses first to third modules (30, 40, 50) in the internal space (16) of the casing (12). The "modules" as used herein refer to a plurality of parts configured to be able to be handled as one piece.

The first module (30) includes the first container (31), the total heat exchanger (21), and the filter (24). Specifically, in the first module (30), the total heat exchanger (21) and the filter (24) are fixed to the total heat exchanger containing portion (33) of the first container (31).

The second module (40) includes the second container (41), the utilization heat exchanger (25), the pump (29), and the refrigerant pipe joints (27). Specifically, in the second module (40), the utilization heat exchanger (25) and the pump (29) are fixed to sidewalls and the upper surface of the second container (41) via associated supports. In the second module (40), the refrigerant pipe joints (27) and the drainpipe joint (29b) are fixed to the front side surface of the second container (41).

The third module (50) includes the third container (51) and the air supply fan (22). Specifically, in the third module (50), the air supply fan (22) is fixed inside the third container (51).

The casing (12) includes the first module (30), the second module (40), and the third module (50) arranged in this order from the front toward the back. The first to third modules (30, 40, 50) are arranged close to the left side of the internal space (16) of the casing (12). In other words, the left side surface of each module (30, 40, 50) is in contact with the inner wall of a left-side panel of the casing (12).

The second module (40) and the third module (50) are configured to be movable forward and backward through the internal space (16) of the casing (12). The first, second, and third modules (30), (40), and (50) are held by the casing (12). In this example, the first module (30) is fixed to the frame part (15c) of the indoor panel (15) with fastening members (e.g., bolts). The third module (50) is fixed to the second side plate (12d) of the casing (12) by fastening members (e.g., bolts).

Here, the casing (12) has therein a first space (S1). As illustrated in FIG. 7, the first space (S1) is a space that overlaps with the access hole (18) when viewed from a first direction (in this example, the top-to-bottom direction) orthogonal to the opening surface of the access hole (18). In other words, the first space (S1) is included in the internal space (16) of the casing (12).

The first module (30) is disposed in the first space (S1). The first container (31), the filter (24), and the total heat exchanger (21) are disposed in the first space (S1). The first module (30) is arranged at a position overlapping with the access hole (18) when viewed from the top-to-bottom direction. More specifically, the entire first module (30) overlaps with the access hole (18) in the top-to-bottom direction. In other words, the entire lower surface of the first module (30) is exposed from the access hole (18). When viewed from the top-to-bottom direction, the projected area of the first container (31) is smaller than the area of the access hole (18). Thus, the first module (30) can be taken out of the casing (12) immediately by pulling the first module (30) exposed from the access hole (18) downward.

The second module (40) is arranged at a position not overlapping with the access hole (18) when viewed from the top-to-bottom direction. In this example, the second module (40) has a front end portion that overlaps with the access hole (18) when viewed from the top-to-bottom direction, and a back portion that overlaps with the bottom plate (12b) of the casing (12) when viewed from the top-to-bottom direction. In other words, the second container (41), the utilization heat exchanger (25), and the pump (29) are arranged, as a whole, at a position not overlapping with the access hole (18) when viewed from the first direction (top-to-bottom direction).

The second module (40) is configured to be slidable forward and backward through the internal space (16) of the casing (12). The second module (40) is movable toward the first space (S1). In other words, the second container (41), the utilization heat exchanger (25), and the pump (29) are movable toward the first space (S1). It is thus possible to expose the entire second module (40) from the access hole (18) by moving the second module (40) forward after taking the first module (30) out of the casing (12).

When viewed from the top-to-bottom direction, the projected area of the second container (41) is smaller than the area of the access hole (18). Thus, the second module (40) can be taken out of the casing (12) by pulling the second module (40) exposed from the access hole (18) downward.

The third module (50) is arranged at a position not overlapping with the access hole (18) when viewed from the top-to-bottom direction. In other words, the air supply fan (22) of the third module (50) is arranged at a position overlapping with the bottom plate (12b) of the casing (12) when viewed from the top-to-bottom direction.

The third module (50) is configured to be slidable forward and backward through the internal space (16) of the casing (12). The second module (40) is movable toward the first space (S1). In other words, the air supply fan (22) is movable toward the first space (S1).

When viewed from the top-to-bottom direction, the projected area of the third container (51) is smaller than the area of the access hole (18). Thus, the entire third module (50) is exposed from the access hole (18) by moving the third module (50) forward after taking the second module (40) out of the casing (12). The third module (50) exposed from the access hole (18) can be taken out.

### (7) Arrangement of Refrigerant Pipe Joints

As illustrated in FIG. 7, the refrigerant pipe joints (27) are disposed in the internal space (16) that communicates with the access hole (18) of the casing (12). Specifically, the refrigerant pipe joints (27) are disposed in the first space (S1) of the casing (12). The refrigerant pipe joints (27) are disposed on the right side of the first module (30) in the first space (S1). In other words, the refrigerant pipe joints (27) are disposed in a portion of the first space (S1) where the first module (30) is not disposed. The refrigerant pipe joints (27) are arranged at positions overlapping with the access hole (18) when viewed from the top-to-bottom direction (first direction). The refrigerant pipe joints (27) are positioned to face the access hole (18). In other words, the refrigerant pipe joints (27) are exposed from the access hole (18). It is thus possible to check the refrigerant pipe joints (27) immediately, by removing the indoor panel (15) from the ventilation unit (11).

Here, if the refrigerant pipe joints (27) are disposed outside the casing (12), maintenance of the utilization heat exchanger (25) requires removal of part of the ceiling around the casing (12) so that the refrigerant pipe joints (27) be exposed. Removal of the ceiling in the building is relatively extensive work and therefore increases the maintenance workloads. In the ventilation apparatus (10) of this example, the refrigerant pipe joints (27) are disposed in the internal space (16) that communicates with the access hole (18). Thus, the refrigerant pipe joints (27) can be checked through the access hole (18) by removing the indoor panel (15) of the ventilation unit (11). The maintenance workloads for the utilization heat exchanger (25) can be reduced accordingly.

The outside of the casing (12) is under high-temperature and high-humidity conditions. The refrigerant pipe joints (27) disposed outside the casing (12) may cause condensation on the refrigerant pipe joints (27). In contrast, the refrigerant pipe joints (27) of the ventilation apparatus (10) of this example are disposed in the internal space (16) of the casing (12). This can reduce condensation on the refrigerant pipe joints (27).

The refrigerant pipe joints (27) do not interfere with the first module (30) when the first module (30) is taken out of the ventilation unit (11). Thus, the first module (30) can be taken out easily. As a result, the maintenance of the total heat exchanger (21) and the filter (24) is also easier. Taking the first module (30) out of the ventilation unit (11) results in a larger empty portion of the first space (S1) where nothing is disposed. A working space for disconnecting the refrigerant pipe joints (27) is therefore ensured, which makes the maintenance of the utilization heat exchanger (25) much easier.

The refrigerant pipe joints (27) are disposed outside the air supply path (13) and the exhaust path (14). Specifically, while the air supply path (13) and the exhaust path (14) are provided collectively in a left portion of the casing (12), the refrigerant pipe joints (27) are disposed in a right portion of the casing (12). Since the refrigerant pipe joints (27) are provided outside the air supply path (13) and the exhaust path (14), the flow of air in the air supply path (13) and the exhaust path (14) is less obstructed.

### (8) Process of Removing Modules

The process of taking the modules out of the casing (12) in order for an operator to do maintenance of the total heat exchanger (21) and the utilization heat exchanger (25) will be described. For example, the operator sequentially performs a first step, a second step, a third step, a fourth step, and a fifth step, which will be described below.

### (8-1) First Step

The first step is the step of detaching the indoor panel (15) of the ventilation unit (11). The operator removes the fastening members provided for the indoor panel (15), and moves the indoor panel (15) downward to remove the indoor panel (15) from the ventilation unit (11). The removal of the indoor panel (15) from the ventilation unit (11) exposes the access hole (18) (see FIG. 7). The operator can visually check the first module (30), the refrigerant pipe joints (27), the connection pipes (86, 87), the drainpipe joint (29b), and the drainpipe (29a) through the access hole (18).

### (8-2) Second Step

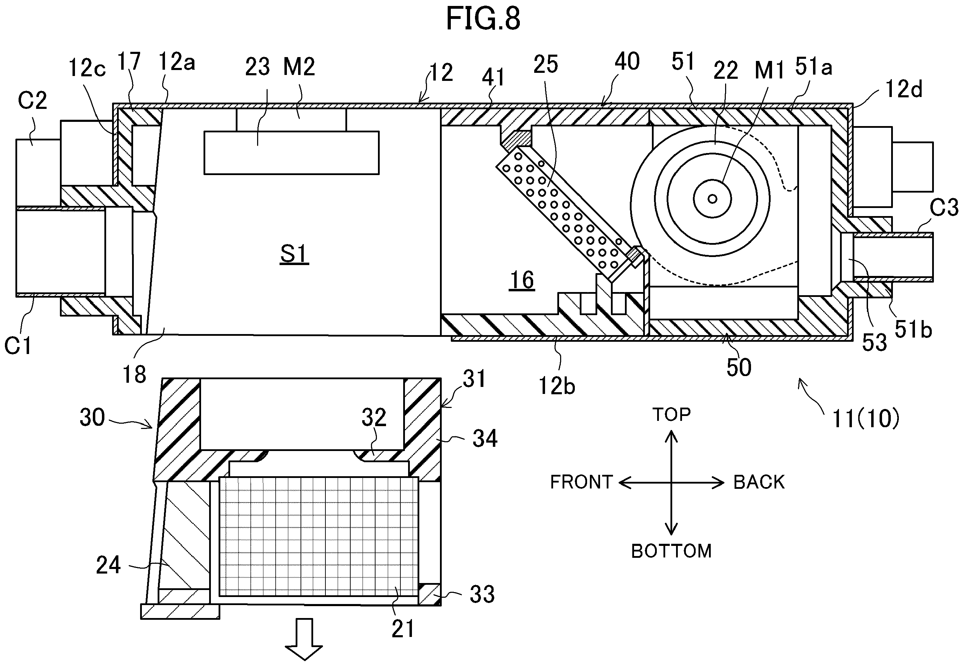

The second step is the step of taking the first module (30) out of the ventilation unit (11). As illustrated in FIG. 8, the operator holds the first module (30) through the access hole (18), and moves the first module (30) downward. The first module (30) can be taken out of the first space (S1) of the casing (12) in this way. The first module (30) includes the total heat exchanger (21) and the filter (24), which makes it easy to take out a plurality of components collectively. The first container (31), the total heat exchanger (21), and the filter (24) that form the first module (30) may be individually taken out through the access hole (18).

In the second step, after the first module (30) is taken out, the exhaust fan (23) fixed to the top plate (12a) of the casing (12) is detached, and is taken out through the access hole (18). As can be seen, taking the first module (30) and the exhaust fan (23) out of the first space (S1) results in a larger empty portion of the first space (S1) where nothing is disposed. Thus, the operator can easily disconnect the refrigerant pipe joints (27) and the drainpipe joint (29b). In other words, the operator can easily perform the third step, which will be described below.

### (8-3) Third Step

The third step is the step of disconnecting the refrigerant pipe joints (27) and the drainpipe joint (29b). The operator inserts their hand into the empty portion of the first space (S1) to disconnect the refrigerant pipe joints (27) and the drainpipe joint (29b) individually. Disconnecting the refrigerant pipe joints (27) and the drainpipe joint (29b) allows the operator to take out the second module (40) easily. In other words, the operator can easily perform the fifth step, which will be described below.

### (8-4) Fourth Step

The fourth step is the step of taking the drain pan (28) out of the ventilation unit (11). The operator inserts their hand into the internal space (16) of the casing (12) through the access hole (18), and holds a front end portion of the drain pan (28) to move the drain pan (28) forward. In other words, the operator moves the drain pan (28) toward the first space (S1). The operator moves the drain pan (28) to a position where the entire bottom surface of the drain pan (28) is exposed from the access hole (18). In other words, the operator moves the drain pan (28) to a position where the entire bottom surface of the drain pan (28) overlaps with the access hole (18) when viewed from the top-to-bottom direction.

Thereafter, the operator moves the drain pan (28) downward to take out the drain pan (28) through the access hole (18). It is thus possible to take the drain pan (28) out of the ventilation unit (11) without leaking condensed water stored in the drain pan (28).

### (8-5) Fifth Step

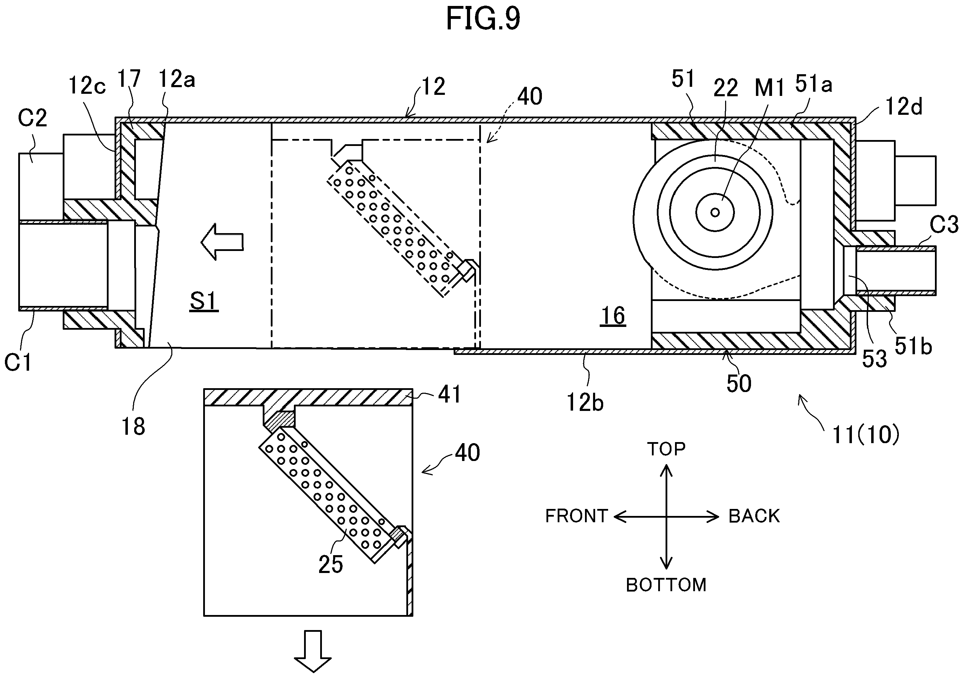

The fifth step is the step of taking the second module (40) out of the ventilation unit (11). The operator inserts their hand into the internal space (16) of the casing (12) through the access hole (18), and holds a front end portion of the second container (41) of the second module (40) to move the second container (41) forward. In other words, as indicated by the two-dot-dash lines in FIG. 9, the operator moves the second module (40) toward the first space (S1). The operator moves the second module (40) to a position where the entire bottom surface of the second module (40) is exposed from the access hole (18). In other words, the operator moves the second module (40) to a position where the entire bottom surface of the second module (40) overlaps with the access hole (18) when viewed from the top-to-bottom direction.

Thereafter, as indicated by the solid lines in FIG. 9, the operator moves the second module (40) downward to take out the second module (40) through the access hole (18). The second module (40) can be taken out of the internal space (16) of the casing (12) in this way. The second module (40) includes the utilization heat exchanger (25), the pump (29), the refrigerant pipe joints (27), and the drainpipe joint (29b), which makes it easy to take out a plurality of components collectively. The second container (41), the utilization heat exchanger (25), the pump (29), the refrigerant pipe joints (27), and the drainpipe joint (29b) that form the second module (40) may be individually taken out through the access hole (18).

The refrigerant pipe joints (27) and the drainpipe joint (29b) have been disconnected in the third step. Thus, in the fifth step, the second module (40) can be taken out of the ventilation unit (11) without concern of dealing with the connection pipes (86, 87) and the drainpipe (29a).

### (9) Features

(9-1) The ventilation apparatus (10) includes the refrigerant pipe joints (27) that each connect the utilization heat exchanger (25) and the associated connection pipe (86, 87) together. The casing (12) has therein the internal space (16) that communicates with the access hole (18). The refrigerant pipe joints (27) are disposed in the internal space (16). According to this configuration, the refrigerant pipe joints (27) are disposed in the internal space (16) of the casing (12). Thus, the refrigerant pipe joints (27) can be checked through the access hole (18). This makes it easier to check the refrigerant pipe joints (27), thus facilitating maintenance of the utilization heat exchanger (25).
   Furthermore, the outside of the casing (12) is under high-temperature and high-humidity conditions. However, the refrigerant pipe joints (27) are prevented from being disposed in a high-temperature and high-humidity environment since the refrigerant pipe joints (27) are disposed in the internal space (16) of the casing (12). This can reduce condensation on the refrigerant pipe joints (27).
(9-2) The casing (12) of the ventilation apparatus (10) has therein the first space (S1) included in the internal space (16) and overlapping with the access hole (18) when viewed from the first direction orthogonal to the opening surface of the access hole (18). The total heat exchanger (21) is disposed in the first space (S1). According to this configuration, the total heat exchanger (21), which is disposed in the first space (S1), can be immediately taken out through the access hole (18).
(9-3) The utilization heat exchanger (25) of the ventilation apparatus (10) is arranged at a position not overlapping with the access hole (18) when viewed from the first direction, and is movable toward the first space (S1). According to this configuration, since the utilization heat exchanger (25) is movable toward the first space (S1), the utilization heat exchanger (25) can be moved toward the first space (S1) after the total heat exchanger (21) is taken out through the access hole (18). This allows the utilization heat exchanger (25) to be pulled out of the casing (12).
(9-4) The refrigerant pipe joints (27) of the ventilation apparatus (10) are arranged at positions not overlapping with the total heat exchanger (21) when viewed from the first direction. This prevents the refrigerant pipe joints (27) from interfering with the total heat exchanger (21) when the total heat exchanger (21) is taken out through the access hole (18). This allows the total heat exchanger (21) to be easily taken out through the access hole (18).
(9-5) The refrigerant pipe joints (27) of the ventilation apparatus (10) are arranged at positions overlapping with the access hole (18) when viewed from the first direction. This allows the operator to immediately check the refrigerant pipe joints (27) through the access hole (18). In addition, a space for disconnecting the refrigerant pipe joints (27) is formed after the total heat exchanger (21) is taken out through the access hole (18). This allows the refrigerant pipe joints (27) to be easily disconnected.
(9-6) The casing (12) of the ventilation apparatus (10) has the inlet (15a) which is included in the access hole (18) and through which room air (RA) is sucked in. According to this configuration, the inlet (15a) through which room air (RA) is sucked can be used as the access hole (18).
(9-7) The ventilation apparatus (10) includes the first container (31) that houses the total heat exchanger (21). The first container (31) is disposed in the first space (S1). When viewed from the first direction, the projected area of the first container (31) is smaller than the opening area of the access hole (18). According to this configuration, since the projected area of the first container (31) when viewed from the first direction is smaller than the opening area of the access hole (18), the first container (31) housing the total heat exchanger (21) can be taken out through the access hole (18). In addition, the first container (31), which is disposed in the first space (S1), can be immediately taken out through the access hole (18).
(9-8) The ventilation apparatus (10) includes the second container (41) that houses the utilization heat exchanger (25). The second container (41) is arranged at a position not overlapping with the access hole (18) when viewed from the first direction, and is movable toward the first space (S1). When viewed from the first direction, the projected area of the second container (41) is smaller than the opening area of the access hole (18).
   According to this configuration, since the projected area of the second container (41) when viewed from the first direction is smaller than the opening area of the access hole (18), the second container (41) housing the utilization heat exchanger (25) can be taken out through the access hole (18). In addition, since the second container (41) is arranged at a position not overlapping with the access hole (18) when viewed from the first direction, and is movable toward the first space (S1), the second container (41) can be pulled out of the casing (12) after the total heat exchanger (21) is taken out through the access hole (18).
(9-9) The refrigerant pipe joints (27) of the ventilation apparatus (10) are fixed to the second container (41). According to this configuration, since the refrigerant pipe joints (27) are fixed to the second container (41), the utilization heat exchanger (25) and the refrigerant pipe joints (27) can be taken out together by pulling the second container (41) out of the casing (12).
(9-10) The refrigerant pipe joints (27) are disposed outside the air supply path (13) and the exhaust path (14). Thus, the flow of air in the air supply path (13) and the exhaust path (14) is less obstructed by the refrigerant pipe joints (27).
(9-11) The drainpipe joint (29b) of the ventilation apparatus (10) is disposed in the internal space (16) of the casing (12). This makes it possible to check the drainpipe joint (29b) through the access hole (18) and therefore makes it easier to do maintenance of the pump (29).

### (10) Variations

The foregoing embodiment may be modified as the following variations. In the following description, differences from the embodiment will be described in principle.

### (10-1) First Variation

The ventilation apparatus (10) of this embodiment may include a partition plate that partitions the interior of the casing (12) into a space housing the total heat exchanger (21) and a space housing the utilization heat exchanger (25). The partition plate divides the space housing the total heat exchanger (21) and the space housing the utilization heat exchanger (25). In other words, the ventilation apparatus (10) of this embodiment does not have to have a module structure. In this case, the refrigerant pipe joints (27) and the drainpipe joint (29b) are provided in the partition plate. Specifically, the refrigerant pipe joints (27) and the drainpipe joint (29b) pass through the partition plate, and are fixed to the partition plate.

In the first variation, as well, the refrigerant pipe joints (27) and the drainpipe joint (29b) are disposed in the internal space (16) of the casing (12), thereby making it easier to check the refrigerant pipe joints (27) and the drainpipe joint (29b). This facilitates maintenance of the utilization heat exchanger (25). In addition, maintenance of the pump (29) is also facilitated.

### (10-2) Second Variation

In the ventilation apparatus (10) of this embodiment, the refrigerant pipe joints (27) and the drainpipe joint (29b) do not have to be fixed while passing through the front side surface of the second container (41). In other words, the refrigerant pipe joints (27) and the drainpipe joint (29b) merely need to be disposed in the first space (S1). Specifically, the heat transfer tube (25a) connected to the refrigerant pipe joints (27) may be fixed while passing through the front side surface of the second container (41). The drainpipe (29a) connected to the drainpipe joint (29b) may be fixed while passing through the front side surface of the second container (41).

In the second variation, as well, the refrigerant pipe joints (27) and the drainpipe joint (29b) are disposed in the internal space (16) of the casing (12), thereby making it easier to check the refrigerant pipe joints (27) and the drainpipe joint (29b). This facilitates maintenance of the utilization heat exchanger (25). In addition, maintenance of the pump (29) is also facilitated.

### (10-3) Third Variation

In the ventilation apparatus (10) of this embodiment, the area of the access hole (18) may be smaller than the projected area of the second container (41) when viewed from the top-to-bottom direction if the second container (41) is not taken out of the casing (12). In other words, the area of the access hole (18) merely needs to be larger than the projected area of the first container (31) when viewed from the top-to-bottom direction. In this case, as well, the first module (30) can be taken out through the access hole (18). Thus, the operator can insert their hand through the access hole (18) and disconnect the refrigerant pipe joints (27) easily, after taking the first module (30) out of the casing (12).

### «Other Embodiments»

The foregoing embodiment and variations thereof may be modified as follows.

The ventilation unit (11) of the ventilation apparatus (10) may be positioned such that the longitudinal direction of the casing (12) is along a vertical direction. This ventilation unit (11) is a so-called vertical ventilation unit. In this case, the ventilation unit (11) is disposed, for example, in an inner wall space behind an inner wall of a building.

The first heat exchanger (21) may be a sensible heat exchanger that transfers only sensible heat between the air flowing through the air supply path (13) and the air flowing through the exhaust path (14).

The switching mechanism (84) is not necessarily the four-way switching valve. The switching mechanism (84) may be a combination of four flow paths and on-off valves that open and close these four flow paths, or may be a combination of two three-way valves.

The expansion valve (85) is not necessarily the electronic expansion valve, and may be a temperature-sensitive expansion valve or a rotary expansion mechanism.

One air supply duct (D3) may be connected to an air supply path (13). Each of the air supply ducts (D3) may include one main pipe joined to the air supply path (13) and a plurality of branch pipes branching from the main pipe. In this case, the outlet ends of the branch pipes communicate with one indoor space (5) or the plurality of indoor spaces (5).

If a plurality of air supply ducts (D3) are each connected to an associated one of a plurality of air supply paths (13), the outlet ends of the plurality of air supply paths (13) may communicate with one indoor space (5) or a plurality of indoor spaces (5).

The access hole (18) may be formed in the casing (12) independently of the inlet (15a).

The second motor (M2) of the exhaust fan (23) may be fixed to the first container (31). In this case, the exhaust fan (23) is included in the first module (30). Thus, the exhaust fan (23) can be taken out by taking the first module (30) out of the ventilation unit (11).

While the embodiment and variations thereof have been described above, it will be understood that various changes in form and details may be made without departing from the spirit and scope of the claims. The embodiments, the variations, and the other embodiments may be combined and replaced with each other without deteriorating intended functions of the present disclosure.

The ordinal numbers such as "first," "second," "third," ..., described above are used to distinguish the terms to which these expressions are given, and do not limit the number and order of the terms.

### INDUSTRIAL APPLICABILITY

As can be seen from the foregoing description, the present disclosure is useful for a ventilation apparatus.

### DESCRIPTION OF REFERENCE CHARACTERS

- 10: Ventilation Apparatus
- 12: Casing
- 13: Air Supply Path
- 14: Exhaust Path
- 15a: Inlet
- 16: Internal Space
- 18: Access Hole (Opening)
- 21: Total Heat Exchanger (First Heat Exchanger)
- 25: Utilization Heat Exchanger (Second Heat Exchanger)
- 27: Refrigerant Pipe Joint (Joint)
- 31: First Container
- 41: Second Container
- 80: Heat Source Unit
- 86, 87: Connection Pipe
- OA: Outdoor Air
- RA: Room Air
- S1: First Space

## Claims

1. A ventilation apparatus comprising:
a casing (12) having an air supply path (13) through which outdoor air is supplied into a room, and an exhaust path (14) through which room air is exhausted to an outside of the room, the casing (12) having an opening (18);
a first heat exchanger (21) configured to allow heat exchange between air flowing through the air supply path (13) and air flowing through the exhaust path (14);
a second heat exchanger (25) connected to a heat source unit (80) through a connection pipe (86, 87) through which a heating medium flows, the second heat exchanger (25) being configured to cool the air flowing through the air supply path (13) with the heating medium; and
a joint (27) configured to connect the second heat exchanger (25) and the connection pipe (86, 87) together,
the casing (12) having an internal space (16) that communicates with the opening (18),
the joint (27) being disposed in the internal space (16).

2. The ventilation apparatus of claim 1, wherein
the casing (12) has a first space (S1) included in the internal space (16) and overlapping with the opening (18) when viewed from a first direction orthogonal to an opening surface of the opening (18), and
the first heat exchanger (21) is disposed in the first space (S1).

3. The ventilation apparatus of claim 2, wherein
the second heat exchanger (25) is arranged at a position not overlapping with the opening (18) when viewed from the first direction, and is movable toward the first space (S1).

4. The ventilation apparatus of claim 2 or 3, wherein
the joint (27) is arranged at a position not overlapping with the first heat exchanger (21) when viewed from the first direction.

5. The ventilation apparatus of any one of claims 2 to 4, wherein
the joint (27) is arranged at a position overlapping with the opening (18) when viewed from the first direction.

6. The ventilation apparatus of any one of claims 2 to 5, wherein
the casing (12) has an inlet (15a) which is included in the opening (18) and through which the room air is sucked.

7. The ventilation apparatus of any one of claims 2 to 6 further comprising:
a first container (31) configured to house the first heat exchanger (21), wherein
the first container (31) is disposed in the first space (S1), and
when viewed from the first direction, a projected area of the first container (31) is smaller than an area of the opening (18).

8. The ventilation apparatus of any one of claims 2 to 7 further comprising:
a second container (41) configured to house the second heat exchanger (25), wherein
the second container (41) is arranged at a position not overlapping with the opening (18) when viewed from the first direction, and is movable toward the first space (S1), and
when viewed from the first direction, a projected area of the second container (41) is smaller than an area of the opening (18).

9. The ventilation apparatus of claim 8, wherein
the joint (27) is fixed to the second container (41).

10. The ventilation apparatus of any one of claims 1 to 9, wherein
the joint (27) is disposed outside the air supply path (13) and the exhaust path (14).
